# EUROPÄISCHE PATENTANMELDUNG

(11) **EP 0 835 707 A2**
(43) Veröffentlichungstag der Anmeldung: **15.04.1998**
(21) Anmeldenummer: 97116422.3
(22) Anmeldetag: 20.09.1997
(51) Int. Cl.: B23B 39/06, B23Q 7/05

(54) **Bohrtisch**

(30) Priorität: 08.10.1996 DE 29617447 U
(71) Anmelder: fischerwerke Artur Fischer GmbH & Co. KG, D-72178 Waldachtal (DE)
(72) Erfinder: Erath, Herbert, 72178 Waldachtal (DE); Bläse, Armin, 72160 Horb-Altheim (DE); Erath, Erwin, 72178 Waldachtal (DE)

(57) **Zusammenfassung**

Die Erfindung betrifft einen Bohrtisch mit einer Auflagefläche (20) für eine Werkstückplatte und mit wenigstens einer Bohrmaschine (26) zum Anbringen von Bohrlöchern in der Werkstückplatte. Um die Bedienung des Bohrtisches durch eine Person auch bei Bearbeitung großer und schwerer Werkstückplatten zu ermöglichen, sind in der Auflagefläche (20) Rollen (32) achsparallel angeordnet, die durch eine Hubvorrichtung (34,36,38,40,42,44) anheb- und absenkbar sind. Bei angehobenen Rollen (32) wird die Werkstückplatte (22) von der Auflagefläche (20) abgehoben, so daß sie in Rollrichtung der Rollen (32) frei verschiebbar ist, und bei abgesenkten Rollen (32) liegt die Werkstückplatte (22) auf der Auflagefläche (20) auf.

## Beschreibung

Die Erfindung betrifft einen Bohrtisch zum Anbringen von Bohrlöchern insbesondere mit Hinterschneidung in Natursteinplatten, Keramikplatten oder dgl. mit den Merkmalen des Oberbegriffs des Anspruchs 1.

Derartige Bohrtische weisen üblicherweise eine Auflagefläche zum Auflegen der Werkstückplatte sowie eine oder mehrere vorzugsweise über der Auflagefläche angebrachte Bohrmaschinen auf, die zum Herstellen der Bohrlöcher absenkbar sind. Die Bohrmaschine kann als an sich bekannte Bohrvorrichtung zum Herstellen eines Bohrlochs mit Hinterschneidung ausgebildet sein. Zum Positionieren der Werkstückplatte in Bezug auf die Bohrmaschine wird die Werkstückplatte auf der Auflagefläche verschoben. Die bekannten Bohrtische haben daher insbesondere bei großen und infolgedessen schweren Werkstückplatten den Nachteil, daß erheblicher Kraftaufwand zum Positionieren der Werkstückplatte notwendig ist. Das Positionieren ist daher mühsam und zeitaufwendig, es verlängert die Bearbeitungsdauer der Werkstückplatten. Zum Verschieben großer Werkstückplatten sind zwei Personen notwendig.

Der Erfindung liegt die Aufgabe zugrunde, einen Bohrtisch der eingangs genannten Art so auszubilden, daß er einfach und auch bei Bearbeitung großer und schwerer Werkstückplatten von einer Person bedient werden kann und der die Bearbeitungszeit einer aufgelegten Werkstückplatte verkürzt.

Diese Aufgabe wird erfindungsgemäß durch die Merkmale des Anspruchs 1 gelöst. Der erfindungsgemäße Bohrtisch weist achsparallel zueinander angeordnete Rollen im Bereich seiner Auflagefläche auf, die mit einer Hubvorrichtung gemeinsam anheb- und absenkbar sind. In der abgesenkten Stellung der Hubvorrichtung liegt die Werkstückplatte auf der Auflagefläche auf, kann also nur durch Überwinden einer Haftreibungskraft auf der Auflagefläche verschoben werden. Diese Stellung wird nachfolgend Bearbeitungsstellung genannt. In der angehobenen Stellung heben die Rollen die Werkstückplatte von der Auflagefläche ab, so daß sie zum Positionieren mit geringer Kraft in Rollrichtung der Rollen auf dem Bohrtisch verschoben werden kann. Diese Stellung der Hubvorrichtung wird nachfolgend Positionierstellung genannt. Die Erfindung hat den Vorteil, daß eine auf den Bohrtisch aufgelegte Werkstückplatte zum Positionieren in Bezug auf die Bohrmaschine mit minimaler Kraft verschoben werden kann. Durch anschließendes Absenken wird die Werkstückplatte in ihrer Position festgelegt und kann, jedenfalls wenn sie ausreichend schwer ist, gebohrt werden. Leichtere Werkstückplatten werden in ihrer Position am Bohrtisch festgespannt. Nach dem Herstellen des Bohrlochs kann die Werkstückplatte wieder angehoben und zum Bohren eines weiteren Bohrlochs positioniert werden. Die Werkstückplatte läßt sich also mittels des erfindungsgemäßen Bohrtischs mit minimaler Kraft sehr schnell positionieren. Der Bohrtisch ist auch bei großen und schweren Werkstückplatten mühelos von einer Person bedienbar.

Vorzugsweise weist die Hubvorrichtung ein Fußbedienelement, beispielweise einen Fußschalter oder einen Fußhebel, zu ihrer Betätigung auf, so daß eine Werkstückplatte von einer Person mit einem Fuß anheb- und absenkbar ist. Die Person hat dadurch beide Hände zum Positionieren der Werkstückplatte und zum Bedienen der Bohrmaschine frei.

Bei einer Ausgestaltung der Erfindung weist die Hubvorrichtung ein mit dem Fußhebel antreibbares, mechanisches Getriebe zum Anheben und Absenken der Werkstückplatte auf. Das Getriebe kann beispielsweise ein Ketten- oder ein Hebelgetriebe sein. Diese Ausgestaltung der Erfindung hat den Vorteil, daß außer zum Antrieb der Bohrmaschine keine Fremdenergie für die Arbeit mit dem Bohrtisch notwendig ist. Vorteil der Betätigung mit dem Fußhebel ist, daß mit dem Fuß eine große Kraft zum Anheben auch einer schweren Werkstückplatte mit geringer Anstrengung aufbringbar ist, wobei der Fußhebel und das Getriebe die Fußkraft übersetzen..

In bevorzugter Ausgestaltung der Erfindung weist die Hubvorrichtung eine Rasteinrichtung auf, die die Hubvorrichtung in der angehobenen Positionierstellung lösbar arretiert. Als Rasteinrichtung kann die Hubvorrichtung beispielsweise eine an sich bekannte Herzkurvensteuerung aufweisen. Diese Ausgestaltung der Erfindung hat den Vorteil, daß die Werkstückplatte in der angehobenen Positionierstellung verbleibt, in der sie verschiebbar ist, ohne daß der Fußhebel ständig mit Kraft niedergetreten gehalten werden muß, und erleichtert dadurch das Arbeiten am erfindungsgemäßen Bohrtisch.

Eine Ausgestaltung der Erfindung weist zwei oder mehr Anschläge auf, die in Verschieberichtung der Werkstückplatte hintereinander angeordnet sind. Die Anschläge sind einzeln in Verschieberichtung der Werkstückplatte verstellbar. Die Werkstückplatte läßt sich nacheinander gegen die Anschläge schieben, um sie zum Bohren mehrerer Bohrlöcher zu positionieren. Die Anschläge lassen sich mit der Hubvorrichtung aus der Bahn herausbewegen, die Werkstückplatte beim Verschieben zurücklegt, so daß die Werkstückplatte an den Anschlägen vorbei verschiebbar ist. Dazu läßt sich die Hubvorrichtung in eine dritte Stellung bringen, in der die Werkstückplatte mit den Rollen von der Auflagefläche abgehoben ist und in der die Anschläge nach oben oder unten aus der Bahn der Werkstückplatte herausbewegt sind. Eine weitere Möglichkeit ist es, die Werkstückplatte so weit anzuheben, daß sie sich oberhalb der Anschläge befindet. Nachdem die Werkstückplatte an einem der Anschläge vorbei bewegt worden ist, werden die Anschläge wieder in die Bahn der Werkstückplatte hineinbewegt, so daß die Werkstückplatte gegen den nächsten Anschlag geschoben und dadurch positioniert werden kann. Der oder die Anschläge, an denen die Werkstückplatte vorbeibewegt worden ist, liegen federbelastet an der Werkstückplatte an und behindern deren Verschiebung nicht. Auf diese Weise läßt sich die Werkstückplatte sehr schnell zum Bohren verschiedener Bohrlöcher positionieren.

Zum Bohren der auf die Auflagefläche abgesenkten Werkstückplatte weist der Bohrtisch einer Ausführungsform der Erfindung eine Spannvorrichtung zum Festspannen der Werkstückplatte auf.

Die Erfindung wird nachfolgend anhand eines in der Zeichnung dargestellten Ausführungsbeispiels näher erläutert. Es zeigen:
- Figur 1: einen erfindungsgemäßen Bohrtisch in perspektivischer Darstellung schräg von vorn;
- Figur 2: den Bohrtisch aus Figur 1 in perspektivischer Darstellung schräg von hinten;
- Figuren 3 bis 5: den Bohrtisch aus Figur 1 in Seitenansicht in verschiedenen Betriebsstellungen;
- Figur 6: die Darstellung einer Einzelheit gemäß Pfeil VI in Figur 1; und
- Figuren 7 und 8: Darstellungen von Einzelheiten gemäß Pfeilen VII und VIII in Figur 2.

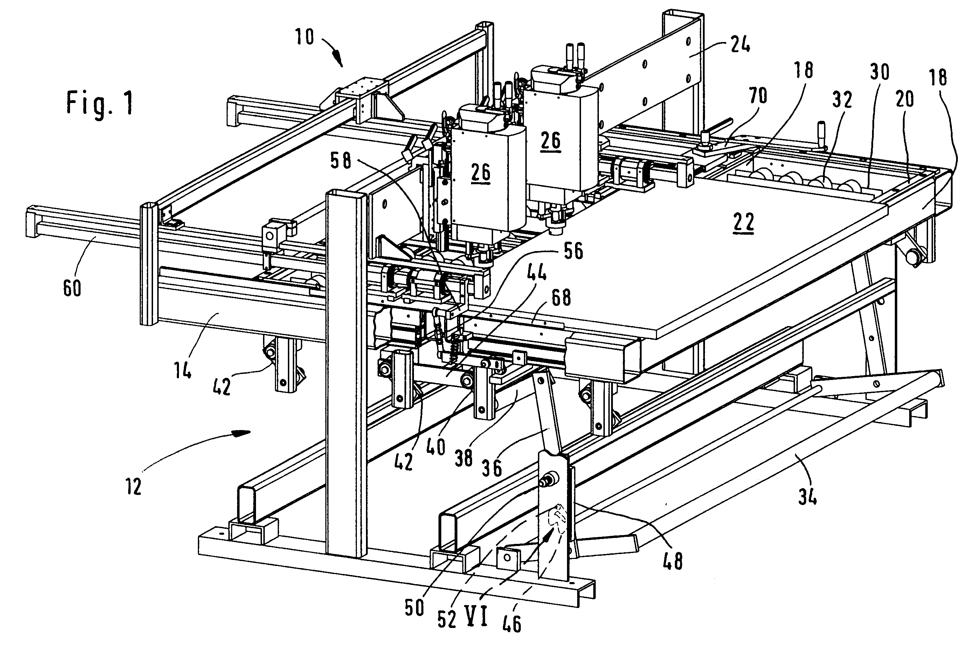

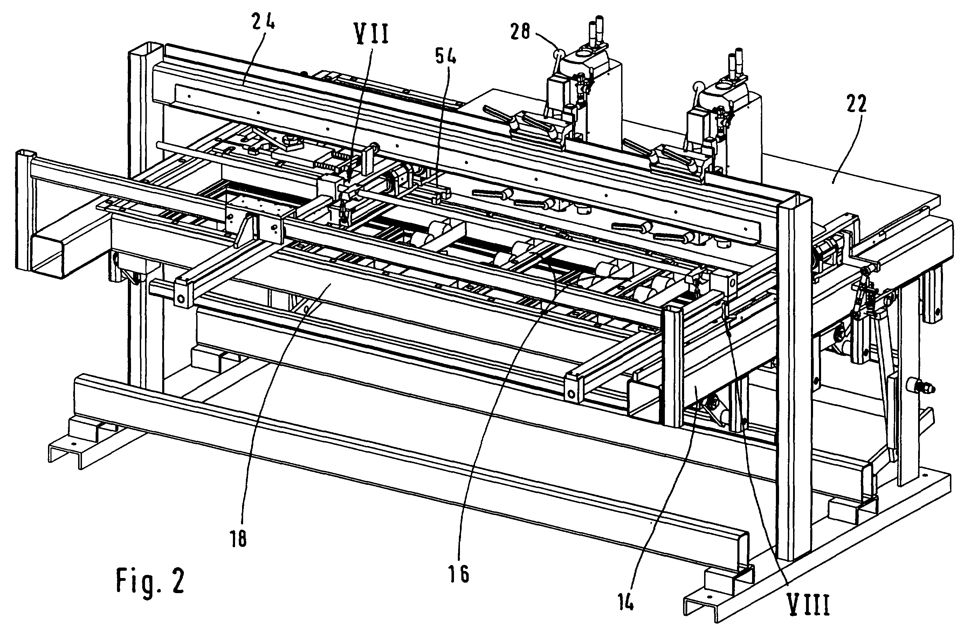

Der in Figuren 1 und 2 dargestellte, erfindungsgemäße Bohrtisch 10 weist ein Gestell 12 auf, das eine Anzahl von horizontal angeordneten Längsträgern 14, 16 und Querträgern 18 in einer für Arbeitsplatten üblichen Höhe trägt. Die Längs- und Querträger 14, 16, 18 bilden einen Rechteck-Gitterrahmen. Oberseiten der Längs- und Querträger 14, 16, 18 befinden sich in einer Ebene, sie bilden eine Auflagefläche 20 zum Auflegen einer Werkstückplatte 22, beispielsweise einer als Fassadenplatte vorgesehenen Naturstein- oder Keramikplatte.

An einer Traverse 24, die oberhalb der Arbeitsfläche 20 am Gestell 12 angebracht ist, sind zwei Bohrmaschinen 26 oder an sich bekannte Bohrvorrichtungen zum Herstellen von Bohrlöchern mit Hinterschneidung angebracht. Die Bohrmaschinen 26 sind in Querrichtung zum Bohrtisch 10 verschiebbar und feststellbar. Mittels eines Handhebels 28 lassen sie sich zum Bohren absenken.

In Zwischenräumen zwischen den Längs- und Querträgern 14, 16, 18 sind über die Auflagefläche 20 verteilt Rollen 32 drehbar in Rollenschienen 30 gelagert, die in Längsrichtung angeordnet sind. Drehachsen der Rollen 32 verlaufen parallel zu den Querträgern 18. Die Rollen 32 können mit einer unten beschriebenen Hubvorrichtung angehoben und abgesenkt werden. In einer abgesenkten Bearbeitungsstellung sind die Rollen 32 unter die Auflagefläche 20 abgesenkt, so daß die Werkstückplatte 22 auf der Auflagefläche 20 aufliegt. In einer angehobenen Positionierstellung stehen die Rollen 32 nach oben über die Auflagefläche 20 vor, so daß die Werkstückplatte 22 von der Auflagefläche 20 abgehoben und dadurch in Längsrichtung des Bohrtisches 10 leichtgängig verschiebbar ist.

Die Hubvorrichtung weist ein mechanisches Hebelgetriebe auf, das mit einem Fußhebel 34 betätigbar ist: Der Fußhebel 34 ist um eine quer zum Bohrtisch 10 verlaufende Achse schwenkbar am Fuß des Gestells 12 gelagert. An einer Vorderseite des Bohrtischs 10 kann der sich über die Breite des Bohrtischs 10 erstreckende Fußhebel 34 niedergetreten werden.

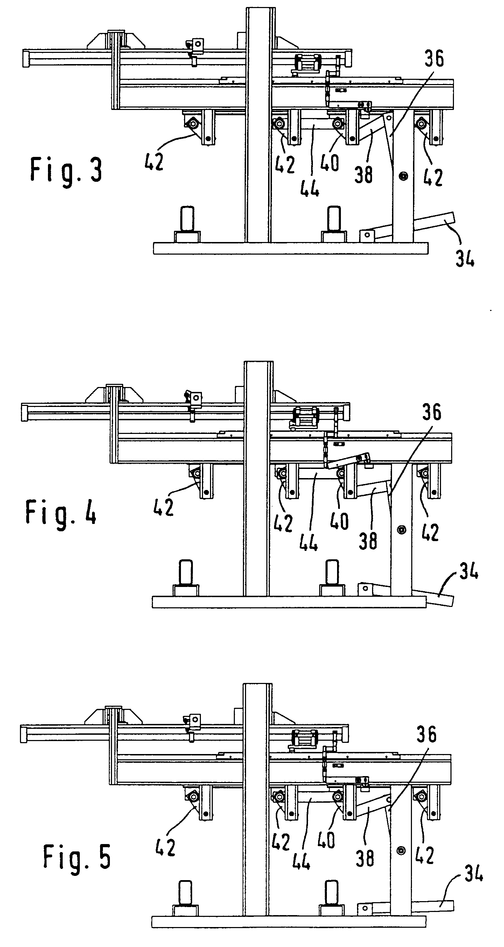

An beiden Seiten des Fußhebels 34 sind Zugstreben 36 angelenkt, über die ein Winkelhebel 38 verschwenkbar ist, der schwenkbar an der Unterseite äußerer Längsträger 14 gelagert ist. Beim Niedertreten des Fußhebels 34 verschwenkt ein Hebelarm 40 des Winkelhebels 38 nach oben. Parallel mit ihm verschwenken Schwenkhebel 42 nach oben, die ebenfalls an der Unterseite der äußeren Längsträger 14 schwenkbar gelagert und über eine Parallelogrammstrebe 44 oder über die Rollen schienen 30 mit dem Hebelarm 40 des Winkelhebels 38 nach Art eines Parallelogramms verbunden sind (vgl. Figuren 3 bis 5). Die Rollenschienen 30 sind auf den Hebelarm 40 des Winkelhebels 38 sowie auf die Schwenkhebel 42 aufgesetzt. Sie lassen sich durch Niedertreten des Fußhebels 34 in die Positionierstellung (Figur 5) anheben, in der die von ihnen getragenen Rollen 32 die Werkstückplatte 22 von der Auflagefläche 20 abheben, so daß die Werkstückplatte 22 in Längsrichtung auf dem Bohrtisch 10 frei verschiebbar ist.

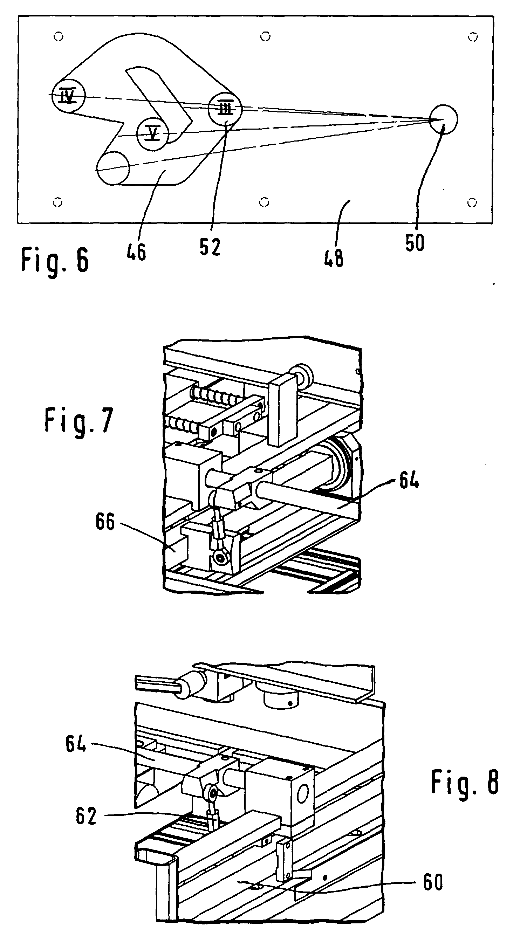

Zur Arretierung in der angehobenen Positionierstellung weist die Hubvorrichtung eine Rasteinrichtung in Form einer in Figur 6 dargestellten Herzkurvensteuerung auf: Eine Herzkurvenbahn 46 ist in einer Schwenkplatte 48 versenkt angebracht, die um einen Zapfen 50 am Gestell 12 schwenkbar ist. In die Herzkurvenbahn 46 greift ein Rastzapfen 52 ein, der fest an der Zugstrebe 36 der Hubvorrichtung angebracht ist. Der Rastzapfen 52 ist in Figur 6 in vier verschiedenen Positionen dargestellt, von denen die nummerierten Positionen III, IV, V der Bearbeitungsstellung (Figur 3), der dritten Stellung (Figur 4) und der Positionierstellung (Figur 5) entsprechen.

Zur Betätigung der Hubvorrichtung wird der Fußhebel 34 niedergetreten, wodurch die Zugstrebe 36 nach unten gezogen und die Rollenschienen 30 vom Hebelarm 40 des Winkelhebels 38 und den Schwenkhebel 42 nach oben gedrückt werden. Der Rastzapfen 52 der Zugstrebe 36 bewegt sich dadurch in der Herzkurve 46 von Position III in Position IV. Wird der Fußhebel 34 anschließend losgelassen, gelangt der Rastzapfen 52 in die arretierte Position V, in der er von selbst verbleibt, die Zugstrebe 36 in einer nach unten gezogenen Stellung hält und dadurch die Rollenschienen 30 in angehobener Positionierstellung arretiert. Durch nochmaliges Niedertreten und Loslassen des Fußhebels 34 gelangt der Rastzapfen 52 über die in Figur 6 nicht numinerierte Position zurück in die Position III, in der die Rollenschienen 30 wieder in die Bearbeitungsstellung abgesenkt sind.

In einem hinteren Bereich des erfindungsgemäßen Bohrtischs 10 sind auf jeder Seite der Werkstückplatte 22 zwei federbelastete Schwenkanschläge 54 angeordnet. Die Schwenkanschläge 54 befinden sich in Verschieberichtung der Werkstückplatte 22 hintereinander und sind in der Verschieberichtung verstellbar. Sie befinden sich in einer Roll- oder Verschiebebahn der Werkstückplatte 22 und lassen sich mittels der Hubvorrichtung aus der Verschiebebahn herausschwenken: Dazu ist eine Zugstange 56 am Hebelarm 40 des Winkelhebels 38 angelenkt, der über einen Schwenkhebel 58 einen in Längsrichtung verlaufenden Vierkantstab 60 verschwenkt, auf dem die Schwenkbeschläge 54 drehfest und in Längsrichtung verschieb- und feststellbar angebracht sind. Wird der Fußhebel 34 voll niedergetreten, so daß der Rastzapfen 52 an der Zugstrebe 36 in die Position IV in der Herskurve 46 gelangt, verschwenkt die Zugstange 56 den Vierkantstab 60 so weit, daß die Schwenkanschläge 54 soweit nach oben verschwenken, daß die Werkstückplatte 22 unter ihnen hindurchgeschoben werden kann.

Die Schwenkbewegung der Vierkantstange 60 wird von einer Druckstange 62 auf ein quer zum Bohrtisch 10 verlaufendes Rundrohr 64 übertragen (Figur 8). Das Rundrohr 64 überträgt die Schwenkbewegung auf einen zweiten Vierkantstab 66, der auf der anderen Seite der Werkstückplatte 22 angeordnet ist und in Längsrichtung des Bohrtischs 10 verläuft. Der zweite Vierkantstab 66 verschwenkt um denselben Winkel wie der Vierkantstab 60 mit entgegengesetzter Drehrichtung. Er trägt ebenfalls ein Paar Schwenkanschläge 54, so daß die Schwenkanschläge 54 auf beiden Seiten der Werkstückplatte 22 gemeinsam aus deren Verschiebebahn heraus verschwenkbar sind. Der zweite Vierkantstab 66 läßt sich in Querrichtung des Bohrtischs 10 verstellen zur Anpassung an eine Breite der Werkstückplatte 22.

Auf einem (im dargestellten Ausführungsbeispiel dem linken) Längsträger 14 ist eine Längsführung 68 angebracht. Auf der gegenüberliegenden Seite ist eine an sich bekannte, nach Art eines Schraubstocks wirkende Spannvorrichtung 70 auf der Auflagefläche 20 des Bohrtischs 10 angebracht.

Die Funktion des erfindungsgemäßen Bohrtischs 10 ist folgende: Zum Bohren einer Serie gleich großer Werkstückplatten 22 mit übereinstimmender Bohrlochanordnung werden die Bohrmaschinen 26 in Querrichtung auf einen bestimmten Abstand von der Führungsleiste 68 eingestellt. Anschließend werden die Schwenkanschläge 54 in Längsrichtung auf ihren Vierkantstangen 60, 66 auf einen bestimmten Abstand von den Bohrmaschinen 26 eingestellt.

Eine Werkstückplatte 22 wird auf die Auflagefläche 20 aufgelegt, so daß sie an der Führungsleiste 68 anliegt. Der Fußhebel 34 wird niedergetreten, so daß der Rastzapfen 52 der Zugstrebe 36 in die Position IV und nach Loslassen des Fußhebels 34 in die arretierte Position V gelangt, in der er von selbst verbleibt. Dadurch werden die Rollenschienen 30 angehoben und die Werkstückplatte 22 von der Auflagefläche 20 abgehoben, so daß sie frei auf den Rollen 32 in Längsrichtung des Bohrtischs 10 verschiebbar ist. Die Werkstückplatte 22 wird bis zu den ersten Schwenkanschlägen 54 nach hinten verschoben. Anschließend wird der Fußhebel 34 niedergetreten und wieder losgelassen, so daß der Rastzapfen 52 über die nicht nummerierte Position in die Position III gelangt. Die Rollenschienen 30 sind abgesenkt und die Werkstückplatte 22 liegt auf der Auflagefläche 20 auf. Anschließend kann die Werkstückplatte 22 mit der Spannvorrichtung 70 gegen die Führungsleiste 68 gespannt werden. Sie ist zum Bohren des ersten Bohrungspaares positioniert. Nach dem Bohren des ersten Bohrungspaares wird die Spannvorrichtung 70 gelöst und der Fußhebel 34 niedergetreten, so daß der Rastzapfen 52 in die Position IV in der Herskurve 46 gelangt. In dieser Position befindet sich der Bohrtisch 10 in seiner dritten Stellung, die Werkstückplatte 22 ist frei verschiebbar angehoben und die Schwenkanschläge 54 sind aus der Bahn der Werkstückplatte 22 nach oben herausgeschwenkt. Die Werkstückplatte 22 läßt sich unter die ersten Schwenkanschläge 54 verschieben. Nun wird der Fußhebel 34 losgelassen, der Rastzapfen 52 gelangt wieder in die arretierte Position V, in der er von selbst verbleibt. Der Bohrtisch 10 befindet sich in der Positionierstellung. In dieser Stellung ist die Werkstückplatte 22 weiterhin frei verschiebbar. Die vorderen Schwenkanschläge 54 liegen federbelastet auf der Werkstückplatte 22 auf, so daß die Werkstückplatte 22 unter ihnen verschoben werden kann, bis sie an den nächsten Schwenkanschlägen 54 anliegt. Der Fußhebel 34 wird erneut niedergetreten und losgelassen, so daß der Rastzapfen 52 in die Position III gelangt, in der die Werkstückplatte 22 auf der Auflagefläche 20 aufliegt und das nächste Bohrungspaar gebohrt werden kann.

## Patentansprüche

1. Bohrtisch mit einer Auflagefläche für eine Werkstückplatte und mit einer Bohrmaschine zum Anbringen von Bohrlöchern in der Werkstückplatte,
**gekennzeichnet durch** in der Auflagefläche (20) achsparallel angeordnete Rollen (32) und durch eine Hubvorrichtung (34, 36, 38, 40, 42, 44), mit der die Rollen (32) anheb- und absenkbar sind, wobei die angehobenen Rollen (32) die Werkstückplatte (22) von der Auflagefläche (20) abheben, so daß sie in Rollrichtung der Rollen (32) frei verschiebbar ist, und wobei die Werkstückplatte (22) bei abgesenkten Rollen (32) auf der Auflagefläche (20) aufliegt.

2. Bohrtisch nach Anspruch 1, **dadurch gekennzeichnet,** daß die Hubvorrichtung (36, 38, 40, 42, 44) ein Fußbedienelement (34) zu ihrer Betätigung aufweist.

3. Bohrtisch nach Anspruch 1, **dadurch gekennzeichnet,** daß die Hubvorrichtung ein mechanisches Getriebe (36, 38, 40, 42, 44) zum Anheben der Rollen (32) aufweist.

4. Bohrtisch nach Anspruch 3, **dadurch gekennzeichnet,** daß das Getriebe als Hebelgetriebe (36, 38, 40, 42, 44) ausgebildet ist.

5. Bohrtisch nach Anspruch 1, **dadurch gekennzeichnet,** daß die Hubvorrichtung (36, 38, 40, 42, 44) eine Rasteinrichtung (46, 48, 50, 52) aufweist, die die Hubvorrichtung (36, 38, 40, 42, 44) mit angehobenen Rollen (32) lösbar arretiert.

6. Bohrtisch nach Anspruch 5, **dadurch gekennzeichnet,** daß die Hubvorrichtung (36, 38, 40, 42, 44) eine Herskurvensteuerung (46, 48, 50, 52) als Rasteinrichtung aufweist.

7. Bohrtisch nach Anspruch 1, **dadurch gekennzeichnet,** daß der Bohrtisch (10) zwei oder mehr Anschläge (54) aufweist, gegen die die Werkstückplatte (22) auf den angehobenen Rollen (32) schiebbar ist, wobei die Anschläge (54) in Rollrichtung der Werkstückplatte (22) hintereinander angeordnet und durch Betätigung der Hubvorrichtung (36, 38, 40, 42, 44) aus einer Rollbahn der Werkstückplatte (22) heraus bewegbar sind, so daß die Werkstückplatte (22) an den Anschlägen (54) vorbei verschiebbar ist.

8. Bohrtisch nach Anspruch 1, **dadurch gekennzeichnet,** daß der Bohrtisch (10) eine Spannvorrichtung (70) aufweist, mit der die Werkstückplatte (22) festspannbar ist.
